(19) **Europäisches Patentamt**
**European Patent Office**
**Office européen des brevets**

(11) **EP 2 169 522 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(51) Int Cl.:
*G06F 3/048* *(2006.01)* *G06F 3/023* *(2006.01)*

(21) Anmeldenummer: **08165323.0**

(22) Anmeldetag: **26.09.2008**

(54) **Verfahren und Vorrichtung zur Eingabe von Texten**

Method and device for inputting text

Procédé et dispositif destinés à la saisie de textes

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**31.03.2010 Patentblatt 2010/13**

(73) Patentinhaber: **General Algorithms Ltd.**
**London SW8 1RL (GB)**

(72) Erfinder: **Karafiát, László**
**9932 Viszák (HU)**

(74) Vertreter: **Schneider, Günther Martin et al**
**Bettinger Schneider Schramm**
**Patent- und Rechtsanwälte**
**Postfach 86 02 67**
**81629 München (DE)**

(56) Entgegenhaltungen:
**WO-A-2004/063833      US-A- 5 574 482**
**US-A1- 2004 104 896**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung, insbesondere ein mobiles Endgerät, zur Eingabe von Texten mittels eines Eingabemediums, wobei die zur Texteingabe bestimmten Zeichen auf einer Eingabeschablone dargestellt werden.

Derartige Verfahren und Vorrichtungen sind aus dem Stand der Technik bekannt. So sind etwa Verfahren zur tastaturlosen Eingabe von Buchstaben mittels eines Eingabestifts auf einem mit einem Touchscreen ausgestatteten Display bekannt. Die Eingabe eines Textes erfolgt dabei durch Tippen (sog. Multistroke) auf eine kleine, auf dem Display eingeblendete Tastatur. Derartige Touchscreens, bei denen die Eingabe eines Textes über eine eingeblendete Tastatur erfolgt, finden in Informationsterminals, etwa auf Messen oder für die Fahrplanauskunft auf Bahnhöfen Verwendung. Im mobilen Bereich werden solche Touchscreens vorzugsweise bei PDAs (Personal Digital Assistent), Tablett-PCs oder bei Spielkonsolen eingesetzt.

Des Weiteren ist aus dem Stand der Technik bekannt, auf einem Touchscreen ein Wort durch Verbinden (sog. Unistroke) der das Wort bildenden Buchstaben einzugeben, wobei das Verbinden der Buchstaben durch eine kontinuierliche Bewegung eines Eingabemediums von einem Buchstaben zum jeweils nächsten Buchstaben des einzugebenden Wortes erfolgt.

Die aus dem Stand der Technik bekannten Verfahren zur Texteingabe auf einem Touchscreen per Unistroke haben gemeinsam, dass die Eingabegeschwindigkeit von der Länge des Pfades zwischen den einzelnen Buchstaben eines Worts abhängt. Dies wurde bereits 1954 von Fitts erkannt, welcher hieraus die Geschwindigkeit zur Eingabe eines Worts, bestehend aus mehreren Buchstaben, abgeleitet hat. Fitts hat u.a. postuliert, dass die Zeit für das Verbinden bzw. nacheinander Antippen zweier Buchstaben auf einem Touchscreen mit Hilfe eines Eingabemediums von der Distanz zwischen den beiden Buchstaben sowie der Größe der Eingabefläche des zweiten zu verbindenden Buchstabens abhängt. Diese Beziehung ist allgemein als Fitts' Law bekannt, wonach

$$t_m = a + b \cdot \log_2 (d \, / \, w + 1)$$

gilt, wobei

| | | |
|---|---|---|
| $t_m$ | die Zeit für die Bewegung des Eingabemediums vom Ausgangsbuchstaben zum Zielbuchstaben ist; |
| $a$ und $b$ | experimentell zu bestimmende Parameter der individuellen menschlichen Leistungsfähigkeit sind; |
| $d$ | die Distanz vom Ausgangsbuchstaben zum Zentrum der Eingabefläche des Zielbuchstabens ist; und |
| $w$ | die Breite der Eingabefläche des Zielbuchstabens ist. |

Fitts' Law besagt, dass die Eingabegeschwindigkeit zur Eingabe von Texten, wobei die Eingabe durch Verbinden bzw. durch nacheinander Antippen der die Texte bildenden Buchstaben erfolgt, nach oben beschränkt ist. Lediglich das menschliche Leistungsvermögen (die Parameter $a$ und $b$) hat Einfluss auf die Eingabegeschwindigkeit der Texte.

Mehrere, aus dem Stand der Technik bekannte Verfahren versuchen, diese durch Fitts' Law vorgegebene obere Grenze der Eingabegeschwindigkeit zu überwinden.

So ist etwa aus der EP 1 555 601 A2 ein Verfahren zur Eingabe von Texten auf einer Eingabeschablone bekannt, wobei die das Wort bildenden Buchstaben nacheinander verbunden werden. Damit ist dieses Verfahren zur Eingabe von Texten hinsichtlich der Eingabegeschwindigkeit gemäß Fitts' Law nach oben beschränkt, da alle die das Wort bildenden Buchstaben miteinander verbunden werden müssen. Diese obere Schranke hinsichtlich der Eingabegeschwindigkeit wurde versucht dadurch zu überwinden, indem eine sog. Look-Up-Funktion zur Verfügung gestellt wird. Damit wird dem Benutzer des Systems nach der Eingabe einer bestimmten Anzahl von Buchstaben eine Anzahl von Wörtern bereitgestellt, welche zur Vervollständigung der Eingabe ausgewählt werden können (sog. Auto-Vervollständigung). Durch dieses Verfahren wird allerdings die obere Schranke gemäß Fitts' Law nicht überwunden. Zum einen kann nicht sichergestellt werden, dass die Look-Up-Funktion auch korrekte Vorschläge liefert, zum anderen unterliegen zumindest die eingegebenen Buchstaben der Bedingung nach Fitts' Law, d.h., dass zumindest für einzugebenden Buchstaben verbunden werden müssen, so dass hiefür die Geschwindigkeit nach oben begrenzt ist..

Des Weiteren ist aus der US 2004/01 20583 ein Verfahren zur Eingabe einer Zeichenfolge bekannt, wobei die Zeichenfolge durch Verbinden der die Zeichenfolge bildenden Buchstaben erfolgt. Die Eingabe der Zeichenfolge, dessen Eingabe mit Hilfe eines Erkennungsverfahrens (z.B. Pattern-Matching) erkannt werden kann, basiert dabei auf der Eingabe einer Zeichenfolge, die auch ohne Zeichenschablone erfolgen kann. Dies hat zur Folge, dass ein Ideograph (ein Ideograph ist eine Graphik, die ein komplettes Wort beschreibt) mehreren Wörtern entsprechen kann, so dass nach Abschluss der Eingabe des Ideographen dem Benutzer eine Liste von Wörtern bereitgestellt wird, aus denen der Benutzer das eigentliche einzugebende Wort auswählen kann. Da der Ideograph einer Verbindung der das Wort bildenden Buchstaben entspricht und da bei einer Mehrdeutigkeit eines Ideographen eine weitere Eingabe durch den Benutzer notwendig ist, ist die obere Grenze gemäß Fitts' Law nach diesem Verfahren im Durchschnitt sogar schlechter als eine Eingabe von Zeichenfolgen, bei der lediglich alle Zeichen eines Worts hintereinander verbunden werden.

Eine Verbesserung der Eingabegeschwindigkeit wird versucht dadurch zu erreichen, indem ein einem Wort zugeordneter Ideograph unabhängig von der Größe des Ideographen ist. Dadurch ändert sich allerdings lediglich der Abstand zwischen den Buchstaben des durch den Ideographen beschriebenen Wortes. Demnach kann zwar die Eingabegeschwindigkeit verbessert werden, die obere Grenze der Eingabegeschwindigkeit ist aber weiterhin durch Fitts' Law vorgegeben, da auch kleine Ideographen einer Verbindung von Buchstaben eines Wortes entsprechen.

Das Verfahren hat zudem den Nachteil, dass sämtliche Ideographen gelernt werden müssen, falls die Eingabe ohne Eingabeschablone erfolgt. Ein weiterer Nachteil besteht darin, dass die eingegebenen Ideographen mittels rechenintensiver Algorithmen (z.B. Pattern-Recognition, Pattern-Scaling zum Normieren der Eingabe, Pattern-Matching, Look-Up-Algorithmen für den Zugriff auf interne Wörterbücher) und leistungsfähiger Hardware analysiert und verarbeitet werden müssen, um das entsprechende zugehörige Wort zu ermitteln, wobei trotzdem nicht sichergestellt werden kann, dass das ermittelte Wort auch das vom Benutzer des Systems gewollte Wort ist. Deshalb stellt das System auch Mittel zur Verfügung, um bei Mehrdeutigkeiten oder Ungenauigkeiten in der Eingabe ein entsprechendes Wort aus einer Anzahl von möglichen Wörtern auszuwählen. Das Erfordernis leistungsfähiger Recheneinheiten ist insbesondere dann von Nachteil ist, wenn die Texteingabe auf einem mobilen Endgerät bereitgestellt werden soll.

Aus der US 2004/01 40 956 A1 ist ein Verfahren zur Eingabe von Texten bekannt, bei dem ebenfalls alle Buchstaben auf einer Schablone berührt werden müssen, so dass auch hier die obere Grenze hinsichtlich der Eingabegeschwindigkeit der oberen Grenze nach Fitts' Law entspricht. Um Ungenauigkeiten bei der Eingabe zu kompensieren, schlägt auch dieses Verfahren vor, bei Mehrdeutigkeiten eine entsprechende Auswahl von Wörtern bereitzustellen, aus der dann das entsprechende Wort ausgewählt werden kann, so dass diese zusätzliche Eingabe dazu führt, dass auch bei diesem Verfahren die obere Grenze der Eingabegeschwindigkeit im Durchschnitt schlechter ist als die obere Grenze gemäß Fitts' Law.

Dieses Verfahren beruht auf einem Matching-Algorithmus, welcher den eingegebenen Ideographen mit in einer Datenbank gespeicherten Wörtern bzw. mit den diesen Wörtern zugeordneten Ideographen vergleicht. Dies erfordert eine leistungsfähige Hardware für das Pattern-Matching sowie einen enormen Speicherbedarf für das Speichern der Wörter und die den Wörtern zugeordneten Ideographen.

Aus der US 2004/0104896 A1 ist ebenfalls ein Verfahren zur Texteingabe bekannt, bei dem die ein Wort bildenden Zeichen auf einer Eingabeschablone durch Verbinden ausgewählt werden, sodass auch hier die maximale Eingabegeschwindigkeit durch Fitts' Law begrenzt ist.

Die genannten aus dem Stand der Technik bekannten Verfahren basieren auf der so genannten Unistroke-Methode (Verbinden aller Buchstaben eines Wortes durch kontinuierliches Bewegen des Eingabemediums). Darüber hinaus versuchen alle aus dem Stand der Technik bekannten Verfahren eine Beschleunigung der Eingabe mittels einer Look-Up-Methode, etwa Dictionary-Look-Up zu erreichen, was allerdings nicht dazu führt, dass die Eingabegeschwindigkeit nach Fitts' Law verbessert werden kann. In manchen Fällen ist sogar das Gegenteil der Fall, da die Auswahl der vorgeschlagenen Wörter eine zusätzliche Eingabe erfordert und daher die mittlere maximale Eingabegeschwindigkeit im Durchschnitt sogar schlechter ist als die maximale Eingabegeschwindigkeit nach Fitts' Law.

Aus der WO 2004/063833 A2 ist ein Verfahren zur Texteingabe bekannt, bei dem ein Zeichen aus einer Menge von acht Zeichen durch Bewegen eines Eingabemediums in die Richtung des auszuwählenden Zeichens ausgewählt wird. Um das auszuwählende Zeichen zu ermitteln, wird die Richtung der Bewegung ausgewertet. Da lediglich acht Zeichen bzw. Buchstaben auf der Eingabefläche angezeigt werden sind zusätzliche Eingaben für die Anzeige anderer bzw. der nächsten acht Buchstaben notwendig, was zum einen die Eingabegeschwindigkeit erheblich verringert und zum anderen eine kontinuierliche Eingabe eines Wortes weitestgehend verhindert.

Aufgabe der vorliegenden Erfindung ist es daher, ein Verfahren und eine Vorrichtung bereitzustellen, mit welchen eine intuitive und noch schnellere Eingabe von ganzen Wörtern erfolgen kann.

Zur Lösung dieser Aufgabe wird ein Verfahren zur Detektion der Auswahl eines Zeichens einer einzugebenden Zeichenfolge aus einer Zeichenmenge auf einer Eingabefläche bereitgestellt, wobei die Auswahl mindestens eines Zeichens der Zeichenfolge durch Auswerten eines Richtungsvektors einer Geste ermittelt wird, welche auf der Eingabefläche eingegebenen wird und wobei der Richtungsvektor bezüglich eines Bezugspunktes auf der Eingabefläche ausgewertet wird, indem dem Richtungsvektor ein Ortsvektor mit dem Bezugspunkt als Ursprung oder als Aufpunkt zugeordnet wird.

Der Vorteil besteht darin, dass durch Auswerten einer Geste, bzw. des Richtungsvektors ein Verbinden von Buchstaben vermieden wird, was zu einer Verkürzung des Eingabepfads auf der Eingabefläche führt.

Die Auswahl mindestens eines Zeichens der Zeichenfolge aus der Zeichenmenge kann durch Auswerten einer Richtungsänderung einer Geste ermittelt werden, welche auf einem dem Zeichen zugeordneten Bereich der Eingabefläche eingegeben wird.

Es hat sich als vorteilhaft erwiesen, wenn die Zeichenmenge mindestens zwei disjunkte Teilmengen umfasst, wobei die Richtungsänderung für Zeichen aus der ersten Teilmenge ausgewertet wird, und wobei der Richtungsvektor für die Auswahl eines Zeichens aus der zweiten Teilmenge ausgewertet wird.

Der Bezugspunkt kann als eine Auswahlhilfe für die Auswahl des nächsten Zeichens, welches in der Richtung des Ortsvektors angeordnet ist, verwendet werden.

In einer Ausführungsform kann die Zeichenmenge Buchstaben des Alphabets einer vorbestimmten Sprache umfassen, wobei die zweite Teilmenge Endungen der Wörter in der vorbestimmten Sprache umfassen kann. Damit können ganze Endungen durch Auswerten des Richtungsvektors einer Geste ausgewählt werden.

Die Endungen können die acht häufigsten Endbuchstaben der Wörter umfassen und/oder die acht häufigsten Suffixe der Wörter umfassen.

Dem Richtungsvektor kann ein Ortsvektor aus einer Menge von sechzehn Ortsvektoren zugeordnet werden, wobei die Richtung des Ortsvektors der Richtung des Richtungsvektors entspricht und wobei dem Ursprung oder dem Aufpunkt der sechzehn Ortsvektoren ein Buchstabe aus der zweiten Teilmenge zugeordnet wird.

Die Zuordnung von einem Richtungsvektor zu einem Ortsvektor kann bei Ortsvektoren mit gleicher Richtung in Abhängigkeit davon erfolgen, ob die eingegebene Geste der Auswahl des letzten Buchstabens des Wortes entspricht, indem das Abheben des Eingabemediums von der Eingabefläche detektiert wird.

Vorzugsweise kann auf der Eingabefläche eine Eingabeschablone mit den Zeichen der Zeichenmenge angezeigt werden.

Die eingegebenen Gesten können einen das Wort beschreibenden Ideographen bilden, wobei der Ideograph durch Auswerten der den Ideographen bildenden Gesten ausgewertet wird.

Die Eingabe eines Punktes auf dem einem Zeichen zugeordneten Bereich der Eingabefläche und/oder die Eingabe eines senkrechten Strichs auf dem einem Zeichen zugeordneten Bereich der Eingabefläche kann als Geste ausgewertet werden, wobei dieser Geste in Abhängigkeit von dem Zeichen eine vorbestimmte Zeichenfolge zugeordnet wird. Damit können in vorteilhafter Weise ganze Zeichenfolgen mit einer einzigen Geste eingegeben bzw. ausgewählt werden.

Zur Lösung der Aufgabe wird des Weiteren ein mobiles Endgerät mit einer berührungssensitiven Eingabefläche zur Auswahl von Zeichen einer einzugebenden Zeichenfolge bereitgestellt, wobei auf der berührungssensitiven Eingabefläche eine Eingabeschablone mit einer Anzahl von Zeichen aus einer Zeichenmenge darstellbar ist, wobei die Eingabeeinrichtung eine Auswerteeinheit aufweist, welche ausgestaltet ist, die Auswahl mindestens eines Zeichens der Zeichenfolge durch Auswerten eines Richtungsvektors einer Geste, welche mit einem Eingabemedium auf der Eingabefläche eingegebenen wird, zu ermitteln und wobei die Auswerteeinheit ausgestaltet ist, den Richtungsvektor bezüglich eines Bezugspunktes auszuwerten, indem dem Richtungsvektor ein Ortsvektor mit dem Bezugspunkt als Ursprung oder als Aufpunkt zugeordnet wird.

Vorteilhaft ist es, wenn die berührungssensitive Eingabefläche den Zeichen zugeordnete Bereiche umfasst, wobei die Auswerteeinheit ausgestaltet ist, die Auswahl mindestens eines Zeichens der Zeichenfolge durch Auswerten einer Richtungsänderung einer Geste zu ermitteln, welche mit dem Eingabemedium auf einer dem Zeichen zugeordneten Bereich eingegeben wird.

Besonders vorteilhaft ist es, wenn die Zeichenmenge mindestens zwei disjunkte Teilmenge umfasst, wobei die Auswerteeinheit ausgestaltet ist, die Richtungsänderung einer Geste für Zeichen aus der ersten Teilmenge auszuwerten, und den Richtungsvektor für die Auswahl eines Zeichens aus der zweiten Teilmenge auszuwerten.

Auf der Eingabeschablone kann ein Bezugspunkt dargestellt sein, wobei der Richtungsvektor bezüglich des Bezugspunktes auswertbar ist, indem dem Richtungsvektor ein Ortsvektor aus einer Menge von sechzehn Ortsvektoren mit dem Bezugspunkt als Ursprung oder als Aufpunkt zuordenbar ist, wobei die Richtung des Ortsvektors der Richtung des Richtungsvektors entspricht und wobei dem Ursprung oder dem Aufpunkt der sechzehn Ortsvektoren ein Buchstabe aus der zweiten Teilmenge zuordenbar ist.

In einer vorteilhaften Ausgestaltung der Eingabeeinrichtung ist die Auswerteeinheit ausgestaltet, bei Ortsvektoren mit gleicher Richtung den Richtungsvektor jenem Ortsvektor zuzuordnen, in Abhängigkeit davon, ob die eingegebene Geste der Auswahl des letzten Buchstabens des Wortes entspricht, indem das Abheben des Eingabemediums von der Eingabefläche durch die Auswerteeinheit detektierbar ist.

Die Erfindung wird anhand der Zeichnung und bevorzugter Ausführungsformen näher beschrieben. In der Zeichnung zeigen:

Fig. 1a      eine Ausführungsform einer Eingabeschablone zur Verwendung in dem erfindungsgemäßen Verfahren;

Fig. 1b      eine erfindungsgemäße Eingabeschablone mit einer alternativen Anordnung der Zeichen;

Fig. 2a      einen Ausschnitt einer Eingabeschablone mit den in einer Sprache am häufigsten vorkommenden Endbuchstaben von Wörtern in einer erfindungsgemäßen Anordnung zur Vermeidung der Eingabe von Endbuchstaben;

Fig. 2b - 2d      Beispiele für die Eingabe eines Worts unter Vermeidung der Ein- gabe des Endbuchstabens;

Fig. 3a, 3b      einen Ausschnitt aus einer Eingabeschablone mit einer erfindungs- gemäßen Anordnung von Vokalen zur Vermeidung der Eingabe der Vokale während der Eingabe eines Worts;

Fig. 3c, 3d      Beispiele für die Eingabe eines Worts unter Vermeidung der Ein- gabe der in dem Wort vorkommenden Vokale;

Fig. 4      Beispiele für die Eingabe eines Worts, in welchem ein Doppelkon- sonant vorkommt;

Fig. 5      Beispiele für die Eingabe eines Worts, in welchem Großbuchstaben vorkommen;

Fig. 6, 7      Beispiele für die Eingabe eines Worts, in welchem Sonderzeichen vorkommen;

Fig. 8      ein Beispiel für die Eingabe von Phrasen mit Hilfe besonderer Ges- ten; und

Fig. 9      ein mobiles Endgerät, welches ausgestaltet ist zur Verwendung des erfindungsgemäßen Verfahrens.

Durch die Erfindung werden ein Verfahren und eine Vorrichtung zur Eingabe von Texten mittels eines Eingabemediums bereitgestellt, wobei die zur Texteingabe notwendigen Buchstaben auf einer Eingabeschablone dargestellt werden.

Zunächst werden einige Begriffe definiert, wie sie in der nachfolgenden Beschreibung der Figuren bzw. den Ausfiihrungsformen verwendet werden.

- Ideograph oder Ideogramm - ein Ideograph oder Ideogramm ist eine Graphik, welche ein komplettes Wort repräsentiert.
- Geste - als Geste werden die charakteristischen Teile eines Ideographen bezeichnet. Ein Ideograph wird aus mindestens einer Geste gebildet.
- Eingabemedium - ein Eingabemedium dient zur Eingabe des Ideographen bzw. der Gesten auf einer Eingabeschablone, etwa einem Touchpad. Das Eingabemedium kann z.B. ein Eingabestift oder ein Finger sein.

Die Eingabe eines Wortes erfolgt durch Eingabe eines das Wort repräsentierenden Ideographen auf der Eingabeschablone mit einem Eingabemedium. Der Ideograph wird durch kontinuierliches Bewegen eines Eingabemediums auf der Eingabeschablone erzeugt. Ein Teil des Ideographen bzw. ein Teil des einzugebenden Wortes wird dabei durch Verbinden der das Wort bildenden Buchstaben erzeugt bzw. eingegeben. Ein weiterer Teil des Ideographen wird durch Eingabe von Gesten erzeugt, wobei durch die Eingabe von Gesten verhindert wird, dass Buchstaben während der Eingabe des Ideographen mit dem Eingabemedium angefahren werden müssen, wodurch eine höhere Eingabegeschwindigkeit erreicht wird.

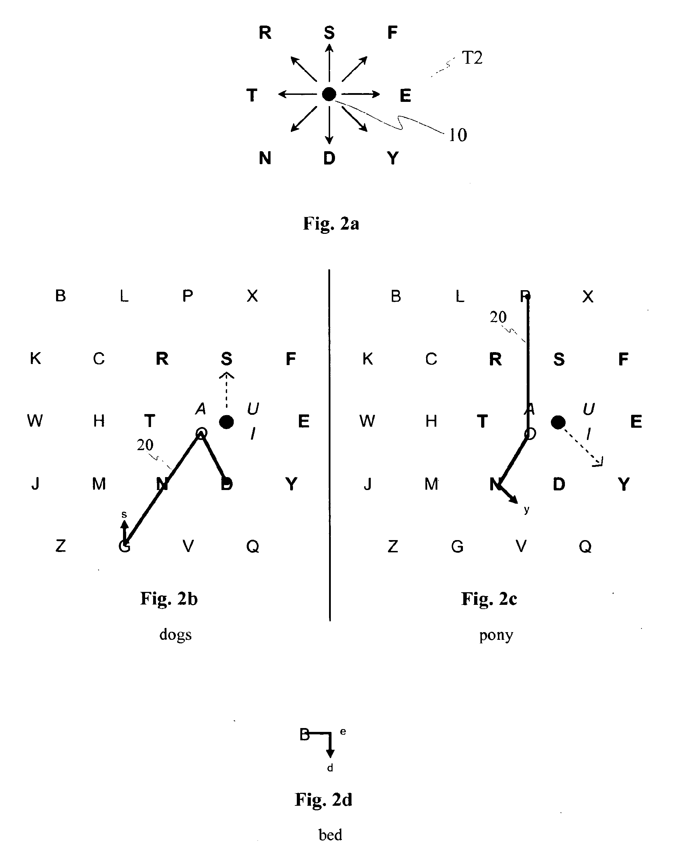

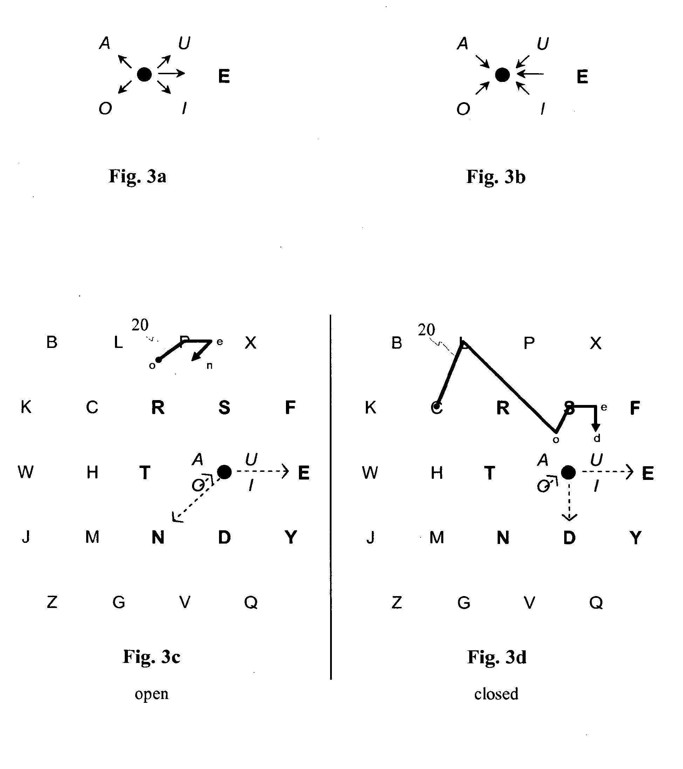

Die Eingabe einer Geste als Bestandteil des Ideographen ersetzt somit das Verbinden eines Buchstaben mit dem nachfolgenden Buchstaben. Dabei ist die Anzahl der Gesten sehr klein (in einer Ausführungsform, wie sie weiter unten beschrieben ist, sind nur 16 unterschiedliche Gesten nötig, vgl. Fig. 2a, Fig. 3a und Fig. 3b), was aber dennoch zu einer Verdopplung der Eingabegeschwindigkeit gegenüber Fitts' Law führt. Die Gesten sind sehr einfach ausgestaltet und damit auch sehr einfach erlernbar.

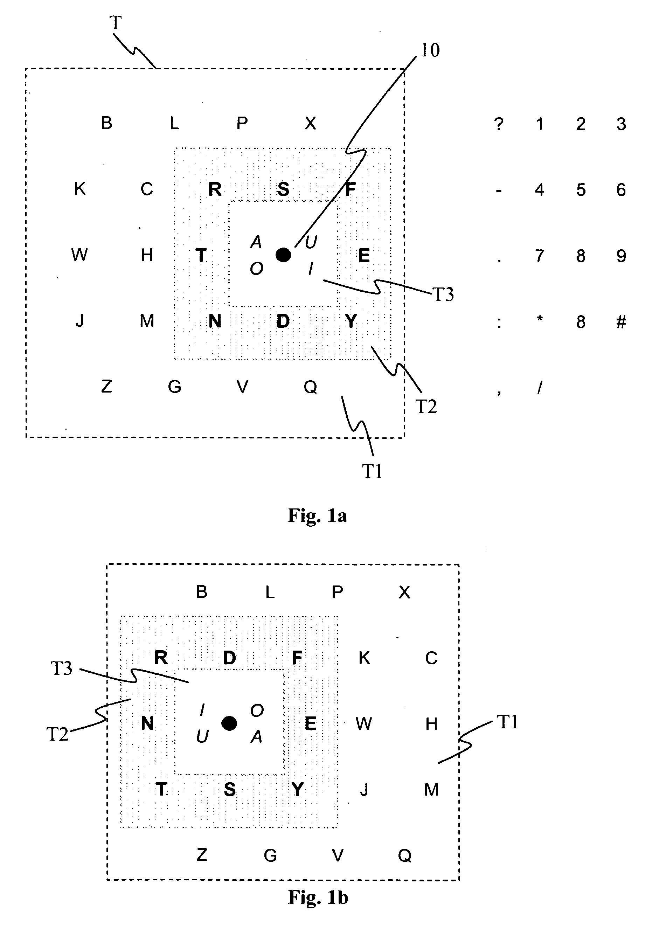

**Fig. 1a** zeigt eine Eingabeschablone T für die Eingabe einer Zeichenfolge mit einer bevorzugten Anordnung der Buchstaben aus dem englischen Alphabet. Die nachfolgend gezeigten Beispiele bzw. Tatsachen beruhen jeweils auf der englischen Sprache, bzw. dem Wortschatz aus der englischen Sprache. Das erfindungsgemäße Verfahren lässt sich aber auf jede Sprache anwenden.

Die Eingabeschablone T umfasst in dieser Ausführungsform alle Buchstaben, welche dazu verwendet werden können, ein Wort zu bilden. In einer Ausführungsform der Erfindung sind die auf der Eingabeschablone T dargestellten Buchstaben in zwei disjunkte Teilmengen unterteilt, wobei die erste Teilmenge T1 Buchstaben umfasst, welche durch Verbinden, d.h. durch direktes Anfahren mit dem Eingabemedium ausgewählt werden, und die zweite Teilmenge (T2, T3) Buchstaben umfasst, welche durch eine Geste ausgewählt werden, ohne dass der auszuwählende Buchstabe direkt mit dem Eingabemedium angefahren werden muss.

In einer weiteren Ausführungsform der Erfindung sind die auf der Eingabeschablone T dargestellten Buchstaben in drei disjunkte Teilmenge T1, T2 und T3 unterteilt. Die Teilmenge T3 umfasst dabei die Vokale A, I, O und U. Die Teilmenge T2 umfasst die acht in der englischen Sprache am häufigsten vorkommenden Endbuchstaben. Die Teilmenge T1 umfasst die restlichen Buchstaben auf der Eingabeschablone. Die Buchstaben der Teilmenge T1 werden durch direktes Anfahren mit dem Eingabemedium ausgewählt. Die Buchstaben der Teilmengen T2 und T3 werden durch Eingabe einer Geste ausgewählt, ohne dass der auszuwählende Buchstabe direkt mit dem Eingabemedium angefahren werden muss.

Die Anordnung der Buchstaben innerhalb der Teilmenge T1 auf der Eingabeschablone T ist für das erfindungsgemäße Verfahren nicht von Bedeutung. Bei der Bildung eines Worts durch Verbinden der das Wort bildenden Buchstaben müssen die Buchstaben aus der Teilmenge T1 auf der Eingabeschablone mit dem Eingabemedium, beispielsweise einem Eingabestift, verbunden werden.

Die Anordnung der Buchstaben innerhalb den Teilmengen T2 und T3 auf der Eingabeschablone sind hingegen für das erfindungsgemäße Verfahren von besonderer Bedeutung.

In der in Fig. 1a gezeigten Eingabeschablone T ist ein Bezugspunkt 10 gezeigt, um welchen die Buchstaben aus der Teilmenge T2 und aus der Teilmenge T3 angeordnet sind. Der Bezugspunkt 10 bildet hierbei das Zentrum der Eingabeschablone hinsichtlich der Teilmengen T2 und T3. Der Bezugspunkt 10 dient hier als Eingabehilfe für Auswahl eines Buchstabens aus den Teilmengen T2 und T3, indem der Bezugspunkt 10 den aktuell mit dem Eingabestift ausgewählten Buchstaben aus der Teilmenge T1 bzw. den nächsten aus der Teilmenge T1 auszuwählenden Buchstaben repräsentiert. Befindet sich das Eingabemedium auf dem Buchstaben "W", so repräsentiert der Bezugspunkt 10 den Buchstaben "W". Dies wird in den nachfolgenden Beispielen näher erläutert werden.

So wird beispielsweise eine Bewegung des Eingabemediums vom Bezugspunkt 10 aus in Richtung "oben" so interpretieren, dass dies eine Bewegung in Richtung des Buchstabens "S" ist. Da der Bezugspunkt 10 den aktuell mit dem Eingabemedium ausgewählten Buchstaben aus der Teilmenge T1 repräsentiert, wird ein Bewegen des Eingabemediums beispielsweise vom Buchstaben "W" aus nach "oben" als Auswahl des Buchstabens "S" interpretiert, ohne dass das Eingabemedium vom Buchstaben "W" zum Buchstaben "S" geführt werden muss. Ergebnis hiervon wäre die Zeichenfolge "WS" bzw. "ws".

Eine Bewegung des Eingabemediums vom Bezugspunkt 10 aus nach "links unten" hat demnach zur Folge, dass dies als Auswahl des Buchstabens "O" oder des Buchstabens "N" interpretiert werden könnte (da sich beide Buchstaben links unterhalb des Bezugspunktes befinden). Diese Mehrdeutigkeit der Auswahl wird jedoch dadurch vermieden, dass die Buchstaben aus der Teilmenge T2 Endbuchstaben eines Worts repräsentieren, während die Buchstaben aus der Teilmenge T3 Vokale repräsentieren, welche innerhalb eines Worts vorkommen.

Da die Eingabe eines Worts durch Abheben des Eingabemediums von der Eingabeschablone T beendet wird, kann das zugrunde liegende System eindeutig erkennen, ob es sich beispielsweise bei der Bewegung des Eingabemediums nach "links unten" um einen Buchstaben innerhalb eines Worts oder um einen Endbuchstaben handelt. Eine Bewegung nach "links unten" mit anschließendem Abheben des Eingabemediums von der Eingabeschablone T ist demnach als Eingabe des Buchstabens "N" zu interpretieren, während eine Bewegung des Eingabemediums nach "links unten" mit anschließender Bewegung des Eingabemediums in Richtung des nächsten Buchstabens des Worts als Auswahl des Vokals "O" interpretiert wird. Beispiele hierfür werden in den nachfolgenden Figuren gezeigt.

Auf einer sensitiven Eingabefläche können neben der Eingabeschablone T weitere Zeichen zur Eingabe zur Verfügung gestellt werden. So zeigt etwa Fig. 1a neben der Eingabeschablone T einen Ziffernblock sowie mehrere Sonderzeichen, welche für die Eingabe eines Textes zur Verfügung stehen.

Fig. 1b zeigt eine alternative Anordnung der Teilmengen T2 und T3 auf einer Eingabeschablone sowie eine alternative Anordnung der Buchstaben innerhalb der Teilmengen T2 und T3.

Diese Anordnung führt dazu, dass eine Bewegung des Eingabemediums, etwa vom Buchstaben "W" nach "oben", zur Zeichenfolge "WD" bzw. "wd" führen würde. Eine Änderung der Anordnung der einzelnen Buchstaben in den jeweiligen Teilmengen führt also dazu, dass eine Geste einer Auswahl eines anderen Buchstaben zugeordnet ist.

Die Anordnung nach Fig. 1a ist besonders vorteilhaft für Linkshänder, während die Anordnung nach Fig. 1b besonders vorteilhaft für Rechtshänder ist, da die Teilmengen T2 und T3 während der Eingabe nicht durch die Hand verdeckt werden. Dies ist vor allem für das schnelle Erlernen des Eingabeverfahrens von Vorteil, was im Zusammenhang mit der Beschreibung zu den nachfolgenden Figuren ersichtlich wird, da die Eingabeschablone gleichzeitig auch als Vorlage für die Gesten dient. Gesten müssen daher nicht mehr gelernt werden.

Fig. 2a zeigt eine Anordnung der Buchstaben aus der Teilmenge T2. Die Buchstaben der Teilmenge T2 sind hierbei die acht in der englischen Sprache am häufigsten vorkommenden Endbuchstaben. Diese Endbuchstaben sind so um den Bezugspunkt 10 angeordnet, dass eine Bewegung des Eingabemediums vom aktuell ausgewählten Buchstaben in eine bestimmte Richtung eindeutig als eine Bewegung in Richtung einer dieser acht Buchstaben zugeordnet werden kann. Diese acht möglichen Bewegungen sind in Fig. 2a als Pfeile dargestellt, wobei der Bezugspunkt dem aktuell ausgewählten Buchstaben entspricht. So entspricht beispielsweise die Bewegung eines Eingabemediums vom Bezugspunkt 10 aus nach "oben" der Auswahl des Buchstabens "S", eine Bewegung des Eingabemediums nach "links unten" entspricht beispielsweise der Auswahl des Buchstabens "N", sofern die Bewegung nach "links unten" nicht zu einer Auswahl des nächsten Buchstaben führt, sondern mit einem Abheben des Eingabemediums endet.

Die Zuordnung der einzelnen Buchstaben zu einer Bewegung des Eingabemediums in eine bestimmte Richtung ist dabei nicht von Bedeutung; wichtig ist lediglich, dass eine Bewegung des Eingabemediums in eine bestimmte Richtung genau einem Buchstaben zuordenbar ist.

Der Bezugspunkt 10 repräsentiert hierbei den zuletzt ausgewählten Buchstaben aus der Teilmenge T1 (oder aus der Teilmenge T3). So würde beispielsweise eine Bewegung des Eingabemediums vom Buchstaben "W" nach "oben" der Auswahl des Buchstabens "S" als nächsten Buchstaben des einzugebenden Worts entsprechen. Da es sich bei dem Buchstaben aus der Teilmenge T2 um Endbuchstaben eines Wortes handelt, kann eine Bewegung des Eingabemediums in eine der acht Richtungen ausgehend von einem Buchstaben mit anschließendem Abheben des Eingabemediums von der Eingabeschablone eindeutig als Auswahl des entsprechenden Endbuchstabens interpretiert werden. Das Eingabemedium muss nicht mehr vom vorletzten Buchstaben eines Worts zum letzten Buchstaben geführt werden, da eine (kurze) Bewegung des Eingabemediums ausgehend vom vorletzten Buchstaben als Bewegung ausgehend vom Bezugspunkt 10 in die Richtung des letzten Buchstabens interpretiert wird. Diese kurzen Bewegungen werden nachfolgend als Gesten bezeichnet. Der Eingabepfad zur Eingabe eines Worts, welches mit einem Buchstaben aus der Teilmenge T2 endet, kann somit nahezu um die Länge des Teilpfads vom vorletzten Buchstaben zum letzten Buchstaben verkürzt werden, was die Eingabegeschwindigkeit erhöht.

Alternativ zu den Endbuchstaben können auch die acht häufigsten Suffixe verwendet werden. Dies ist etwa für jene Sprachen von Vorteil, bei denen die Wörter häufig mit gleichen Suffixen enden. Ein Suffix kann dabei eine bestimmte Kombination von mehreren Buchstaben sein.

In **Fig. 2b** und **Fig. 2c** sind zwei Beispiele für die Eingabe eines Wortes gezeigt, welche mit einem Buchstaben aus der Teilmenge T2 enden. Fig. 2b zeigt den Eingabepfad 20 zur Eingabe des Worts "dogs". Für die Erläuterung der nachfolgenden Beispiele ist es unerheblich, ob die Auswahl eines Buchstabens zur Auswahl des Buchstabens in Großschreibung oder in Kleinschreibung führt. Die Eingabe des Worts beginnt mit Ansetzen des Eingabemediums, welches ein Eingabestift sein kann, auf den Buchstaben "D". Der Eingabestift wird dann in Richtung des Buchstabens "O" bewegt. An dem Buchstaben "O" erfolgt eine Richtungsänderung in Richtung des Buchstabens "G". Die Richtungsänderung auf dem Buchstaben "O" wird als Auswahl des Buchstabens "O" interpretiert. Auf dem Buchstaben "G" erfolgt wiederum eine Richtungsänderung, was als Auswahl des Buchstabens "G" interpretiert wird. Die Richtungsänderungen auf einem Buchstaben werden ebenfalls als Geste bezeichnet.

Im Anschluss an die Auswahl des Buchstabens "G" erfolgt eine kurze Bewegung (Geste) des Eingabestifts nach "oben" mit abschließendem Abheben des Eingabestifts von der Eingabefläche. Diese kurze Bewegung des Eingabestifts nach oben wird als Auswahl des Endbuchstabens "S" interpretiert, da eine Bewegung des Eingabestifts vom Bezugspunkt 10 in Richtung nach "oben" (hier durch einen gestrichelten Pfeil dargestellt) der Auswahl des Buchstabens "S" entspricht. Der Bezugspunkt 10 repräsentiert hierbei den zuletzt ausgewählten Buchstaben "G". Eine Bewegung des Eingabestifts vom vorletzten Buchstaben "G" zum letzten Buchstaben "S" kann somit entfallen. Der letzte Teilpfad hat sich damit drastisch reduziert.

Fig. 2c zeigt die Eingabe des Wortes "pony". Der Eingabestift wird hier auf den Buchstaben "P" aufgesetzt und dann zum Buchstaben "O" geführt. Auf dem Buchstaben "O" findet ein Richtungswechsel statt, was als Auswahl des Buchstabens "O" interpretiert wird. Im Anschluss daran wir der Eingabestift zum Buchstaben "N" geführt, auf dem wiederum ein Richtungswechsel zur Auswahl des Buchstabens "N" stattfindet. Abschließend wird eine kurze Bewegung (Geste) des Eingabestifts vom vorletzten Buchstaben "N" in Richtung "rechts unten" mit abschließendem Abheben des Eingabestifts durchgeführt. Diese kurze Bewegung des Eingabestifts nach "rechts unten" entspricht dabei der Auswahl des Endbuchstabens "Y". Der Bezugspunkt 10 repräsentiert in diesem Beispiel den zuletzt ausgewählten Buchstaben "N", so dass eine Bewegung vom Bezugspunkt 10 in Richtung "rechts unten" der Auswahl des Endbuchstabens "Y" entspricht.

**Fig. 2d** zeigt die Eingabe des Worts "bed". Die Eingabe startet hierbei durch Ansetzen des Eingabestifts auf dem Buchstaben "B". Der Eingabestift wird dann ein kurzes Stück nach rechts (erste Geste) gezogen und im Anschluss daran ein kurzes Stück nach unten (zweite Geste) mit anschließendem Abheben des Eingabestifts. Die erste Geste entspricht der Auswahl des Vokals "E" (die Auswahl der Vokale wird im Zusammenhang mit den Fig. 3a bis 3d näher beschirieben). Die zweite Geste nach unten wiederum entspricht der Auswahl des abschließenden Buchstabens "D", da der Bezugspunkt den vorletzten Buchstaben "E" repräsentiert, so dass eine Bewegung vom Bezugspunkt aus nach unten der Auswahl des Buchstabens "D" entspricht.

Im englischen Wortschatz enden ca. 78 % der Wörter mit den hier aufgeführten acht Endbuchstaben, so dass allein die Verkürzung des Eingabepfads hinsichtlich dieser acht Endbuchstaben zu einer signifikanten Verbesserung der Eingabegeschwindigkeit führt, da der Pfad nicht bis zum letzten Buchstaben des Worts geschlossen werden muss. Die Andeutung der Richtung in Form einer kurzen Geste zum letzten Buchstaben ist ausreichend, wobei die Richtungsandeutung ausgehend vom Bezugspunkt 10 interpretiert wird. Da die acht Endbuchstaben zusammen mit dem Bezugspunkt auf der Eingabeschablone angezeigt werden, müssen diese acht unterschiedlichen Gesten nicht gelernt werden.

**Fig. 3a** und **Fig. 3b** zeigen die Anordnung der Vokale aus der Teilmenge T3 sowie des Vokals E in Bezug auf den Bezugspunkt 10. Bei der Auswertung der Bewegung des Eingabestifts wird hierbei unterschieden, ob der Eingabestift vom Bezugspunkt 10 zu einem Vokal bewegt wird (Fig. 3a) oder ob der Eingabestift vom Vokal zum Bezugspunkt 10 hin bewegt wird (Fig. 3b).

Bei der Bewegung des Eingabestifts vom Bezugspunkt 10 hin zu den Vokalen (Fig. 3a) repräsentiert der Bezugspunkt den zuletzt ausgewählten Buchstaben. D.h. eine Bewegung vom letzten Buchstaben, beispielsweise in Richtung "links oben", wird als Auswahl des Vokals "A" interpretiert.

Bei einer Bewegung des Eingabestifts von einem nicht explizit ausgewählten Vokal hin zu dem Bezugspunkt 10 wird der Bezugspunkt 10 als nächster ausgewählter Buchstabe interpretiert. Damit kann die explizite Eingabe von Vokalen auch bei Wörtern vermieden werden, welche mit einem Vokal beginnen.

Diese beiden Möglichkeiten der Auswahl von Vokalen werden zusammen mit den Figuren 3c und 3d näher beschrieben.

**Fig. 3c** und **Fig. 3d** zeigen zwei Beispiele, an denen verdeutlicht wird, wie bei der Eingabe von Wörtern die explizite Eingabe von Vokalen vermieden werden kann.

Fig. 3c zeigt den Eingabepfad 20 für die Eingabe des Wortes "open". Da dieses Wort mit dem Vokal "O" beginnt, wird der Eingabestift entsprechend der Anordnung des Vokals "O" in Bezug auf den Bezugspunkt 10 links unterhalb des Buchstabens "P" angesetzt und dann von dort aus zum Buchstaben "P" bewegt. Eine Bewegung des Eingabestifts von "links unten" (Geste) zu einem Buchstaben entspricht hierbei einer Bewegung des Eingabestifts vom Vokal "O" hin zum Bezugspunkt 10. Der Bezugspunkt 10 repräsentiert hierbei den nächsten einzugebenden Buchstaben "P", so dass in diesem Beispiel die Buchstabenfolge "OP" abgeleitet wird. Als Nächstes findet auf dem Buchstaben "P" eine Richtungsänderung statt und der Eingabestift wird ein kurzes Stück vom Buchstaben P nach "rechts" (Geste) geführt, was entsprechend der Anordnung der Vokale in Fig. 3a der Auswahl des Buchstabens "E" entspricht. Eine weitere Richtungsänderung sowie eine kurze Bewegung des Eingabestifts nach "links unten" (Geste) mit abschließendem Abheben des Stifts von der Eingabefläche entspricht hierbei, wie bereits im Zusammenhang mit Fig. 2a bis Fig. 2d gezeigt, der Auswahl des Endbuchstabens "N". Mit diesem Verfahren wird zusätzlich die Eingabe von Vokalen während der Eingabe eines Worts vermieden.

Fig. 3d zeigt einen Eingabepfad für die Eingabe des Wortes "closed". Der Eingabestift wird hierbei auf den ersten Buchstaben "C" gesetzt und dann zum Buchstaben "L" bewegt. Auf dem Buchstaben "L" findet zum Zwecke der Auswahl des Buchstabens "L" eine Richtungsänderung statt. Anschließend wir der Eingabestift in den Bereich "links unterhalb" des Buchstabens "S" bewegt, wo die nächste Richtungsänderung stattfindet. Der Eingabestift wird dann von "links unten" in den Buchstaben "S" hinein bewegt. Eine Bewegung des Eingabestifts von links unten in den Buchstaben "S" entspricht gemäß Figur 3b der Auswahl des Vokals "O" mit anschließender Auswahl des Buchstabens "S". An dem Buchstaben "S" findet die nächste Richtungsänderung statt, was zur Auswahl des Buchstabens "S" führt. Anschließend wir der Eingabestift in Richtung "rechts" vom Buchstaben "S" aus bewegt, was der Auswahl des Vokals "E" gemäß Fig. 3a entspricht. Abschließend wir der Eingabestift ein kurzes Stück nach "unten" gezogen und dann von der Eingabefläche abgehoben, was der Auswahl des Endbuchstabens "D" entspricht.

Gemäß den in Fig. 3a bis Fig. 3d gezeigten Verfahren kann die explizite Eingabe bzw. das Verbinden von Vokalen effizient vermieden werden. In der englischen Sprache sind etwa 40 % der Buchstaben eines Textes Vokale, so dass ein Vermeiden der Eingabe von Vokalen einen enormen Geschwindigkeitsvorteil bei der Eingabe von Texten bringt.

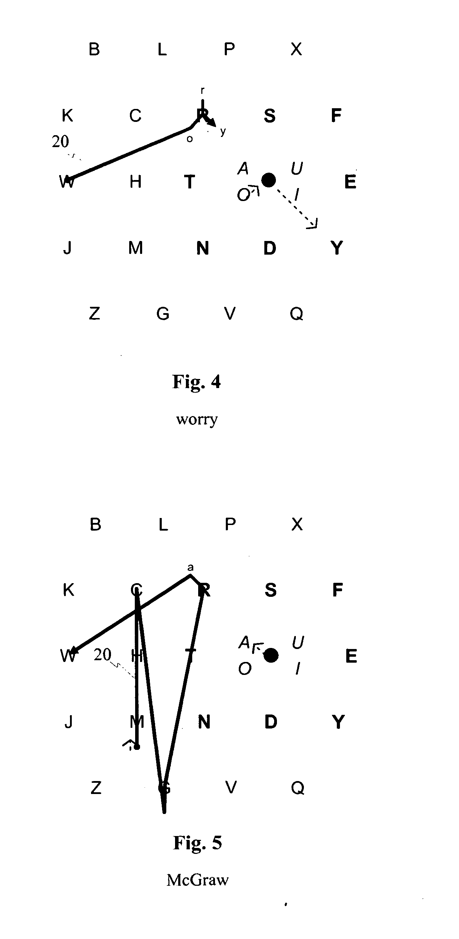

**Fig. 4** zeigt einen Eingabepfad für die Eingabe eines Worts mit einem Doppelbuchstaben innerhalb eines Worts. Gezeigt ist hier die Eingabe des englischen Worts "worry". Die Eingabe der Buchstaben "W" und "O" sowie des abschließenden Buchstabens "Y" erfolgt hierbei, wie bereits im Zusammenhang mit Fig. 2a bis Fig. 3d beschrieben. Die Eingabe des Doppelkonsonanten "RR" erfolgt derart, indem der Eingabestift ein kurzes Stück (Geste) vom Buchstaben "R" nach oben hinaus geführt wird und dann wieder zum Buchstaben "R" zurückgeführt wird. Diese Geste wird als Verdoppelung des ausgewählten Buchstabens interpretiert.

Durch die Anordnung der Vokale um den Bezugspunkt 10 (vgl. Fig. 3b) ergibt sich, dass für die Eingabe eines Vokals vor dem nächsten einzugebenden Buchstaben fünf Gesten zur Verfügung stehen, nämlich die Gesten "von links unten", "von rechts oben", "von links oben", "von rechts unten" und "von rechts". Die drei zur Verfügung stehenden Gesten, nämlich "von oben", "von links" und "von unten" stehen zur eine weitere Verkürzung des Eingabepfades zur Verfügung.

Eine Beispiel, diese drei Gesten zu Verwenden wird nun im Zusammenhang mit den Figuren 5 bis 7 näher beschrieben.

**Fig. 5** zeigt einen Eingabepfad eines Wortes, in dem sowohl am Anfang als auch im Wort Großbuchstaben vorkommen. In diesem Beispiel wird davon ausgegangen, dass die Eingabe eines Wortes im Normalfall mit Kleinbuchstaben erfolgt. Das Bewegen des Eingabestifts von unterhalb des Buchstabens in den Buchstaben hinein (Geste "von unten" gemäß Fig. 3b), wird dabei als Auswahl des entsprechenden Buchstabens als Großbuchstabe interpretiert. So beginnt die Eingabe des Wortes "McGraw" kurz unterhalb des Buchstabens "M". Das Bewegen des Eingabestifts von unten in den Buchstaben "M" veranlasst die Auswahl des Buchstabens "M" als Großbuchstaben. Dasselbe gilt für die Auswahl des Buchstabens "G" als Großbuchstaben. Hierbei wird der Eingabestift vom Buchstaben "C" unterhalb des Buchstabens "G" geführt und dann von dort in den Buchstaben "G" hinein (Geste). Die Auswahl der restlichen Buchstaben, insbesondere des Vokals "A" erfolgt dabei gemäß der in Verbindung mit den Fig. 2a bis 3d beschriebenen Auswahl.

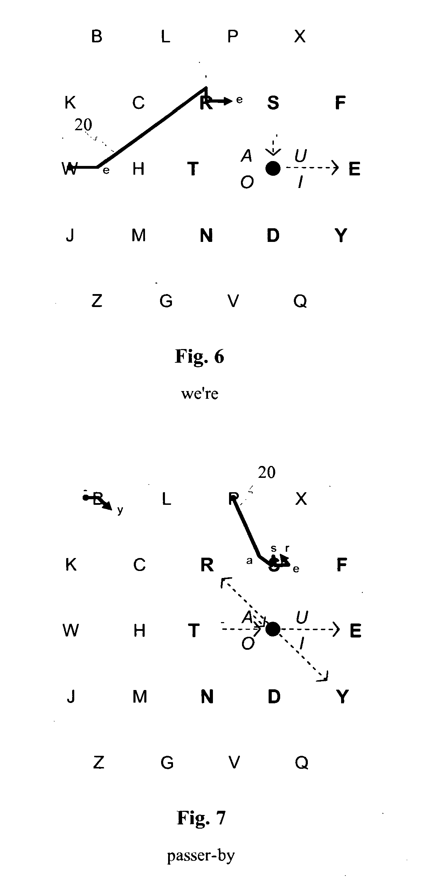

**Fig. 6** zeigt den Eingabepfad für ein Wort, wie beispielsweise "we're", in welchem innerhalb des Wortes ein Apostroph vorkommt. Die Eingabe eines Apostrophs kann so realisiert werden, dass der Eingabestift bei dem Buchstaben, an welchem ein Apostroph vorangestellt werden soll, von oben in den Buchstaben hineingeführt (Geste "von oben" gemäß Fig. 3b) wird.

**Fig. 7** zeigt den Eingabepfad für ein Wort, wie beispielsweise "passer-by", welches innerhalb des Worts einen Bindestrich aufweist. Die Eingabe des Bindestrichs kann dabei so erfolgen, dass der Buchstabe, dem der Bindestrich vorangestellt werden soll, von links (Geste "von links" gemäß Fig. 3b) angefahren wird. Das Anfahren eines Buchstabens von links wird als Geste ausgewertet, nämlich als Geste zur Eingabe eines Bindestriches. Dies ersetzt gleichzeitig das automatisch einfügte Zwischenraum-Zeichen. Es wird dadurch möglich die Gesten für Wortendungen (vgl. Fig. 2a) in beiden Teilen des zusammengesetzten Wortes (*passer* und *by*) voll auszunutzen.

Die in den Fig. 4, 5, 6 und 7 gezeigten Gesten zur Eingabe von Doppelbuchstaben bzw. zur Eingabe von Sonderzeichen können auch durch andere Gesten ersetzt werden, wobei lediglich darauf zu achten ist, dass keine Kollision mit den Gesten, wie sie in Fig. 2a, 3a und 3b gezeigt sind, auftritt.

Das hier gezeigte Verfahren erlaubt es, in der englischen Sprache den Eingabepfad um bis zu 50 % (zuzüglich 16 % Pfadersparnis für die nicht auszuführende Eingabe von Leerzeichen, da die Leerzeichen durch Abheben des Eingabestifts automatisch eingefügt werden können) zu reduzieren. Diese Verkürzung des Eingabepfads entspricht in etwa einer Verdoppelung der Eingabegeschwindigkeit, welche erreicht werden würde, wenn alle Buchstaben des einzugebenden Wortes durch Verbinden ausgewählt werden würden.

Zudem müssen für die Eingabe von Texten keine komplexen Gesten erlernt werden, da sämtliche Buchstaben, welche für die Eingabe eines Textes notwendig sind, auf der Eingabeschablone dargestellt werden. Zusätzlich unterstützt die Anzeige eines Bezugspunktes 10 und die entsprechende Anordnung der Buchstaben aus den Teilmengen T2 und T3 um diesen Bezugspunkt 10 herum den Benutzer bei der Auswahl des nächsten Buchstabens (d.h. bei der Eingabe der entsprechenden Geste) bzw. des letzten Buchstabens eines Wortes. Der Benutzer muss daher lediglich einige wenige Gesten, wie etwa die Gesten für das Erzeugen eines Doppelbuchstabens oder die Geste für das Einfügen eines Anführungszeichens bzw. eines Bindestrichs erlernen.

Ein weiterer Vorteil dieses Verfahrens ergibt sich daraus, dass hiermit auch die bereits bekannten Verfahren zur Eingabe von Texten mittels Verbinden der ein Wort bildenden Buchstaben umgesetzt werden können, da die Bewegungen des Eingabestifts gemäß der in Fig. 2, Fig. 3a und Fig. 3b gezeigten Bewegungen nur dann vom System interpretiert werden müssen, wenn eine entsprechende Bewegung nicht zu einem nachfolgenden Buchstaben führt. Dies ermöglicht den Benutzern einen sanften Umstieg von einem bekannten Verfahren zu dem erfindungsgemäßen Verfahren, was die Akzeptanz des erfindungsgemäßen Verfahrens deutlich erhöht.

Zusätzlich zu den bereits beschriebenen Gesten können noch zusätzliche Gesten bereitgestellt werden, welche die Eingabegeschwindigkeit weiter erhöhen. Zwei Arten dieser zusätzlichen Gesten werden näher beschrieben.

Eine erste dieser zusätzlichen Gesten ist das einfache Antippen eines Buchstabens mit anschließendem Anheben des Eingabestiftes von der Eingabefläche. Dadurch ist es möglich, die 26 am häufigsten benutzten Wörter mit einem einfachen Antippen eines Buchstaben einzugeben. Ein sofortiges Anheben des Eingabestiftes wird zusätzlich als Bestätigung der Eingabe des dem Buchstaben zugeordneten Wortes interpretiert, sodass auch eine separate Bestätigung entfällt.

Eine Auswahl möglicher Zuordnungen (von englischen Wörtern) zu einzelnen Buchstaben ist in nachfolgender Tabelle 1 in Spalte A gezeigt. Die Zuordnung von Wörtern zu einzelnen Buchstaben kann durch den Benutzer individuell festgelegt werden. Bestimmte Wörter müssen keinem Buchstaben zugeordnet werden, da diese bereits durch die einfache Eingabe einer oben beschriebenen Geste ausgewählt werden. So kann etwa das Wort "on" ausgewählt werden, indem der Eingabestift von "links unten" in den Buchstaben "N" hineingeführt wird.

Tabelle 1

| Buchstabe | Spalte A | Spalte B | | Buchstabe | Spalte A | Spalte B |
|---|---|---|---|---|---|---|
| A | a | about | | N | and | now |
| B | but | because | | O | other | only |
| C | can | could | | P | people | part |
| D | down | different | | Q | quite | question |
| E | even | each | | R | are | right |
| F | for | from | | S | she | said |
| G | good | going | | T | the | that |
| H | have | him | | U | you | used |
| I | I | into | | V | very | voice |
| J | just | job | | W | with | which |
| K | know | knew | | X | next | text |
| L | like | last | | Y | your | years |
| M | more | most | | Z | was | zone |

Eine weitere dieser zusätzlichen Gesten ist die Eingabe eines senkrechten Striches direkt auf einem Buchstaben. Mit dieser Geste können zusätzliche der am häufigsten verwendeten Wörter ausgewählt werden. Eine Auswahl möglicher Zuordnungen (von englischen Wörtern) zu einzelnen Buchstaben bei der Eingabe eines senkrechten Striches als Geste ist in Tabelle 1 in Spalte B gezeigt. Die Zuordnung kann auch hier durch den Benutzer individuell festgelegt werden.

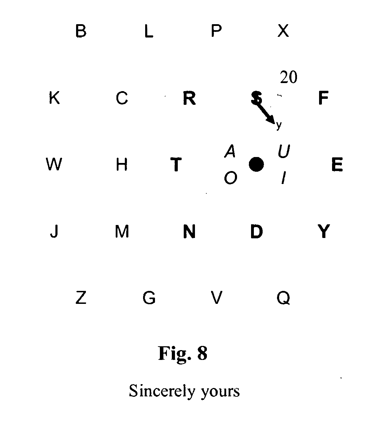

In **Fig. 8** ist ein Beispiel einer weiteren Geste gezeigt, welche eine Erweiterung der eben beschriebenen Geste "senkrechter Strich" darstellt und mit welcher ganze Wortfolgen durch Eingabe einer einfachen und kurzen Geste ausgewählt werden können. Diese Gesten werden hier als Makro-Gesten bezeichnet.

Eine Makro-Geste wird durch die Eingabe eines senkrechten Striches direkt auf einem Buchstaben begonnen. Der Eingabestift wird im Anschluss daran, ohne dass der Eingabestift von der Eingabefläche abgehoben wird, zu einem oder mehreren weiteren Buchstaben gezogen. Nach der Eingabe des senkrechten Striches kann auch eine weitere der oben beschriebenen Gesten eingegeben werden. Die Eingabe einer Makro-Geste kann so durch einfaches Verbinden von Buchstaben und/oder durch Kombination von weiteren Gesten erfolgen.

Fig. 8 zeigt als Beispiel die Eingabe der englischen Wortfolge "see you later" mit Hilfe einer Makro-Geste, wobei die Makro-Geste mit einer Geste zur Auswahl eines Endbuchstaben (vgl. Fig. 2a) beendet wird. Ein senkrechter Strich auf dem Buchstaben "S" wird als Beginn einer Makro-Geste interpretiert. Nach der Eingabe des senkrechten Stiftes wird der Eingabestift nach rechts unten aus dem Buchstaben "S" herausgeführt und anschließend von der Eingabefläche abgehoben. Das Herausführen nach rechts unten mit anschließendem Abheben des Eingabestiftes wird als Auswahl des letzten Buchstabens interpretiert. Die Geste "rechts unten" als letzter Buchstabe wird als Auswahl des Buchstabens "Y" interpretiert (vgl. Fig. 2a). Es ergibt sich in diesem Beispiel also die Buchstabenkombination "SY", welche als Makro-Geste interpretiert wird. Dieser Buchstabenkombination kann beispielsweise die Wortfolge "Sincerely yours" oder aber "see you later" zugeordnet werden.

Mit Hilfe von Makro-Gesten, welche vom Benutzer frei definiert werden können, können zum Beispiel häufig vorkommende Phrasen definiert werden. Das erhöht die Eingabegeschwindigkeit von Texten zusätzlich. Zusammen mit den oben beschriebenen Gesten ergibt sich eine Verdreifachung der Eingabegeschwindigkeit gegenüber den bekannten Multistroke-Verfahren.

Die Makro-Gesten haben auch gegenüber bekannten Look-Up-Methoden (z.B. Dictionary-Look-Up) Vorteile. Ein herkömmliches Dictionary-Look-Up kann nur nach Eingabe von mindestens drei (meist auch vier) Buchstaben erfolgen, weil ansonsten zu viele Alternativen angeboten werden müssten. Einer Makro-Geste hingegen ist genau Wort bzw. eine Wortfolge zugeordnet.

Die Makro-Gesten können in dem Endgerät beispielsweise in Form von XML-Dateien gespeichert werden. Damit sind diese Makro-Gesten auch mit anderen Endgeräten austauschbar.

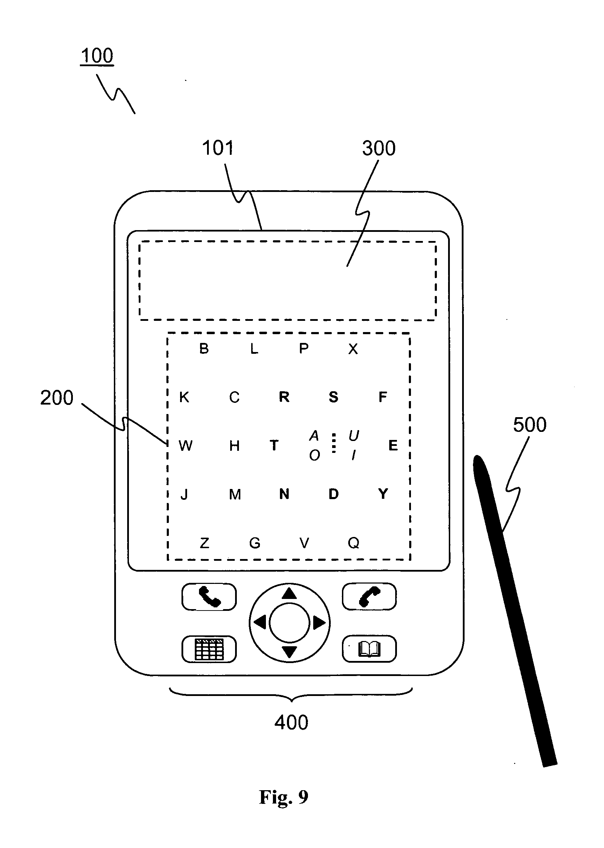

**Fig. 9** zeigt ein mobiles Endgerät, welches angepasst ist zur Ausführung des erfindungsgemäßen Verfahrens. Das mobile Endgerät 100 weist einen berührungssensitiven Bildschirm 101 auf, auf welchem in einem unteren Bereich eine Eingabeschablone, wie sie in Fig. 1a gezeigt ist, eingeblendet ist. In einem oberen Bereich des Bildschirms 101 ist ein Ergebnisfeld 300 angezeigt, in welchem die ausgewählten Buchstaben, bzw. das ausgewählte Wort, bzw. die Wörter angezeigt werden. Mittels eines Eingabestifts 500 werden gemäß dem erfindungsgemäßen Verfahren die Buchstaben eines einzugebenden Worts miteinander verbunden, wobei hinsichtlich der Auswahl der Buchstaben aus den Teilmengen T2 und T3 lediglich eine kurze Bewegung (Geste) in Richtung des nächsten auszuwählenden Buchstabens vorzunehmen ist, wobei die Richtung so zu wählen ist, dass diese einer Bewegung vom Bezugspunkt 10 hin zum auszuwählenden Buchstaben bzw. im Fall nach der in Fig. 3b gezeigten Variante vom auszuwählenden Vokal zum nächsten Buchstaben erfolgt.

Das mobile Endgerät kann zusätzliche Eingabemittel bzw. Auswahlmittel 400 vorsehen. Das mobile Endgerät kann beispielsweise ein Mobiltelefon, ein Tablet-PC oder ein PDA sein.

Die in Fig. 1 und Fig. 8 gezeigte Eingabeschablone ist insbesondere für Linkshänder geeignet, da die den Teilmengen T2 und T3 zugeordneten Buchstaben im rechten mittleren Bereich der Eingabeschablone dargestellt sind. Selbstverständlich können die Buchstaben der Teilmengen T2 und T3 auch im linken Bereich der Eingabeschablone dargestellt werden, so dass auch die Eingabe eines Wortes nach dem erfindungsgemäßen Verfahren für Rechtshänder vorteilhaft ist. Dazu kann das mobile Endgerät eine Umschältemöglichkeit zur Verfügung stellen, mit der die Eingabeschablone zwischen der Bedienung für Links- bzw. Rechtshänder umgeschaltet werden kann.

Ein besonderer Vorteil des erfindungsgemäßen Verfahrens liegt darin, dass die mobilen Endgeräte keine besondere bzw. zusätzliche Recheneinheit benötigen, um die mittels des Eingabestifts auf der Eingabeschablone erfolgten Eingabepfade zu analysieren und einem Wort zuzuordnen. Die Auswahl eines Buchstabens mit dem Eingabestift 500 kann eindeutig erkannt werden. Die Recheneinheit muss lediglich Bewegungen, d.h. Gesten des Eingabestifts, wie sie Fig. 2a, 3a und 3b gezeigt sind, erkennen, was aufgrund der sehr geringen Anzahl von Möglichkeiten auch mit einem herkömmlichen, in einem mobilen Endgerät befindlichen Recheneinheit leicht zu bewerkstelligen ist.

Die Erkennung von Gesten in allen vorgenannten Beispielen beschränkt sich auf Erkennung von Richtungswechseln während der Stiftbewegung auf der Eingabefläche. In anderen Sprachen können jedoch Gesten wie Schleifen, Wellen u.ä. erforderlich sein. Deren Erkennung kann mit bekannten Algorithmen verwirklicht werden. Eine so erkannte Geste, z.B. eine Welle, kann Bestandteil eines ein Wort beschreibenden Ideographen sein, wobei der Ideograph auch die erfindungsgemäßen Gesten enthalten kann, welche mit dem erfindungsgemäßen Verfahren detektiert werden können, um die die dazugehörigen Zeichen bzw. Buchstaben auszuwählen.

**Patentansprüche**

1. Verfahren zur Detektion der Auswahl eines Zeichens einer einzugebenden Zeichenfolge aus einer Zeichenmenge (T1, T2, T3) auf einer Eingabefläche, wobei die Auswahl mindestens eines Zeichens der Zeichenfolge durch Auswerten eines Richtungsvektors einer Geste (20) ermittelt wird, welche auf der Eingabefläche eingegebenen wird, **dadurch gekennzeichnet, dass** der Richtungsvektor bezüglich eines Bezugspunktes (10) auf der Eingabefläche ausgewertet wird, indem dem Richtungsvektor ein Ortsvektor mit dem Bezugspunkt (10) als Ursprung oder als Aufpunkt zugeordnet wird.

2. Verfahren nach Anspruch 1, **dadurch gekennzeichnet, dass** die Auswahl mindestens eines Zeichens der Zeichenfolge aus der Zeichenmenge durch Auswerten einer Richtungsänderung einer Geste (20) ermittelt wird, welche auf einem dem Zeichen zugeordneten Bereich der Eingabefläche eingegeben wird.

3. Verfahren nach Anspruch 2, **dadurch gekennzeichnet, dass** die Zeichenmenge mindestens zwei disjunkte Teilmengen (T2, T3) umfasst,
   wobei die Richtungsänderung für Zeichen aus der ersten Teilmenge (T2) ausgewertet wird, und
   wobei der Richtungsvektor für die Auswahl eines Zeichens aus der zweiten Teilmenge (T3) ausgewertet wird.

4. Verfahren nach einem der vorhergehenden Ansprüche, **dadurch gekennzeichnet, dass** die Zeichenmenge Buchstaben des Alphabets einer vorbestimmten Sprache umfasst, wobei die zweite Teilmenge (T3) Endungen der Wörter in der vorbestimmten Sprache umfasst.

5. Verfahren nach Anspruch 4, **dadurch gekennzeichnet, dass** die Endungen die acht häufigsten Endbuchstaben der Wörter umfassen und/oder die acht häufigsten Suffixe der Wörter umfassen.

6. Verfahren nach einem der Ansprüche 3 bis 5, **dadurch gekennzeichnet, dass** dem Richtungsvektor ein Ortsvektor aus einer Menge von sechzehn Ortsvektoren zugeordnet wird, wobei die Richtung des Ortsvektors der Richtung des Richtungsvektors entspricht und wobei dem Ursprung oder dem Aufpunkt der sechzehn Ortsvektoren ein Buchstabe aus der zweiten Teilmenge zugeordnet wird.

7. Verfahren nach Anspruch 6, **dadurch gekennzeichnet, dass** die Zuordnung von einem Richtungsvektor zu einem Ortsvektor bei Ortsvektoren mit gleicher Richtung in Abhängigkeit davon erfolgt, ob die eingegebene Geste der Auswahl des letzten Buchstabens des Wortes entspricht, indem das Abheben des Eingabemediums von der Eingabefläche detektiert wird.

8. Verfahren nach einem der vorhergehenden Ansprüche, **dadurch gekennzeichnet, dass** auf der Eingabefläche eine Eingabeschablone mit den Zeichen der Zeichenmenge angezeigt wird.

9. Verfahren nach einem der vorhergehenden Ansprüche, **dadurch gekennzeichnet, dass** die eingegebenen Gesten einen das Wort beschreibenden Ideographen bilden, wobei der Ideograph durch Auswerten der den Ideographen bildenden Gesten ausgewertet wird.

10. Verfahren nach einem der vorhergehenden Ansprüche, **dadurch gekennzeichnet, dass** die Eingabe eines Punktes auf dem einem Zeichen zugeordneten Bereich der Eingabefläche und/oder die Eingabe eines senkrechten Striches auf dem einem Zeichen zugeordneten Bereich der Eingabefläche als Geste ausgewertet wird, wobei dieser Geste in Abhängigkeit von dem Zeichen eine vorbestimmte Zeichenfolge zugeordnet wird.

11. Eingabeeinrichtung (100), insbesondere ein mobiles Endgerät mit einer berührungssensitiven Eingabefläche (101) zur Auswahl von Zeichen einer einzugebenden Zeichenfolge, wobei auf der berührungssensitiven Eingabefläche eine Eingabeschablone (200) mit einer Anzahl von Zeichen aus einer Zeichenmenge darstellbar ist, wobei die Eingabeeinrichtung eine Auswerteeinheit aufweist, welche ausgestaltet ist, die Auswahl mindestens eines Zeichens der Zeichenfolge durch Auswerten eines Richtungsvektors einer Geste (20), welche mit einem Eingabemedium (500) auf der Eingabefläche (101) eingegebenen wird, zu ermitteln, **dadurch gekennzeichnet, dass** die Auswerteeinheit ausgestaltet ist, den Richtungsvektor bezüglich eines Bezugspunktes (10) auszuwerten, indem dem Richtungsvektor ein Ortsvektor mit dem Bezugspunkt (10) als Ursprung oder als Aufpunkt zugeordnet wird.

12. Eingabeeinrichtung nach Anspruch 11, **dadurch gekennzeichnet, dass** die berührungssensitive Eingabefläche den Zeichen zugeordnete Bereiche umfasst, wobei die Auswerteeinheit ausgestaltet ist, die Auswahl mindestens eines Zeichens der Zeichenfolge durch Auswerten einer Richtungsänderung einer Geste zu ermitteln, welche mit dem Eingabemedium auf einer dem Zeichen zugeordneten Bereich eingegeben wird.

13. Eingabeeinrichtung nach Anspruch 12, **dadurch gekennzeichnet, dass** die Zeichenmenge mindestens zwei disjunkte Teilmenge umfasst, wobei die Auswerteeinheit ausgestaltet ist, die Richtungsänderung einer Geste für Zeichen aus der ersten Teilmenge auszuwerten, und den Richtungsvektor für die Auswahl eines Zeichens aus der zweiten Teilmenge auszuwerten.

14. Eingabeeinrichtung nach einem der Ansprüche 11 bis 13, **dadurch gekennzeichnet, dass** auf der Eingabeschablone der Bezugspunkt dargestellt ist, wobei der Richtungsvektor bezüglich des Bezugspunktes auswertbar ist, indem dem Richtungsvektor ein Ortsvektor aus einer Menge von sechzehn Ortsvektoren mit dem Bezugspunkt als Ursprung oder als Aufpunkt zuordenbar ist, wobei die Richtung des Ortsvektors der Richtung des Richtungsvektors entspricht und wobei dem Ursprung oder dem Aufpunkt der sechzehn Ortsvektoren ein Buchstabe aus der zweiten Teilmenge zuordenbar ist.

15. Eingabeeinrichtung nach Anspruch 14, **dadurch gekennzeichnet, dass** die Auswerteeinheit ausgestaltet ist, bei Ortsvektoren mit gleicher Richtung den Richtungsvektor jenem Ortsvektor zuzuordnen, in Abhängigkeit davon, ob die eingegebene Geste der Auswahl des letzten Buchstabens des Wortes entspricht, indem das Abheben des Eingabemediums von der Eingabefläche durch die Auswerteeinheit detektierbar ist.

**Claims**

1. Method for the detection of the selection of a character of a character string to be input from a character set (T1, T2, T3) on an input surface, wherein the selection of at least one character of the character string is determined by evaluating a direction vector of a gesture (20), which is input on the input surface, **characterised in that** the direction vector is evaluated with respect to a reference point (10) on the input surface, by assigning to the direction vector a position vector with the reference point (10) as origin or as reference point.

2. Method according to claim 1, **characterised in that** the selection of at least one character of the character string from the character set is determined by evaluating a change of direction of a gesture (20), which is input on an area of the input surface assigned to the character.

3. Method according to claim 2, **characterised in that** the character set comprises at least two disjoint subsets (T2, T3), wherein the change of direction for characters from the first subset (T2) is evaluated, and
   wherein the direction vector for the selection of a character from the second subset (T3) is evaluated.

4. Method according to one of the preceding claims, **characterised in that** the character set comprises letters of the alphabet of a predetermined language, wherein the second subset (T3) comprises endings of the words in the predetermined language.

5. Method according to claim 4, **characterised in that** the endings comprise the eight most frequent last characters of the words and/or the eight most frequent suffixes of the words.

6. Method according to one of claims 3 to 5, **characterised in that** a position vector from a set of sixteen position vectors is assigned to the direction vector, wherein the direction of the position vector corresponds to the direction of the direction vector and in whereby to the origin or the reference point of the sixteen position vectors a character from the second subset is assigned.

7. Method according to claim 6, **characterised in that** the assignment of a direction vector to a position vector in case of position vectors with the same direction depends on whether the input gesture corresponds to the selection of the last character of the word, by detecting when the input medium is lifted off the input surface.

**EP 2 169 522 B1**

8. Method according to one of the preceding claims, **characterised in that** on the input surface an input pattern with the characters of the character set is visualized.

9. Method according to one of the preceding claims, **characterised in that** the input gestures form an ideograph describing the word, the ideograph being evaluated by evaluating the gestures forming the ideograph.

10. Method according to one of the preceding claims, **characterised in that** the input of a point on the area of the input surface assigned to a character and/or the input of a vertical stroke on the area of the input surface assigned to a character is evaluated as a gesture, wherein to this gesture depending on the character a predetermined character string is assigned.

11. Input device (100), especially a mobile terminal with a touch-sensitive input surface (101) for selecting characters of a character string to be input, wherein on the touch-sensitive input surface an input pattern (200) with a number of characters from a character set is displayable, wherein the input device comprises an evaluation unit, which is adapted to detect the selection of at least one character of the character string by evaluating a direction vector of a gesture (20), which is input on the input surface (101) with an input medium (500), **characterised in that** the evaluation unit is adapted to evaluate the direction vector with respect to a reference point (10), by assigning to the direction vector a position vector with the reference point (10) as origin or as reference point.

12. Input device according to claim 11, **characterised in that** the touch-sensitive input surface comprises areas assigned to the characters, wherein the evaluation unit is adapted to detect the selection of at least one character of the character string by evaluating a change of direction of a gesture, which with the input medium is input on an area assigned to the character.

13. Input device according to claim 12, **characterised in that** the character set comprises at least two disjoint subsets, wherein the evaluation unit is adapted to evaluate the change of direction of a gesture for characters from the first subset, and to evaluate the direction vector for the selection of a character from the second subset.

14. Input device according to one of the claims 11 to 13, **characterised in that** on the input pattern the reference point is shown, the direction vector being assessable with respect to the reference point, **in that** a position vector from a set of sixteen position vectors being assignable to the direction vector with the reference point as origin or as reference point, wherein the direction of the position vector corresponds to the direction of the direction vector and wherein a character from the second subset being assignable to the origin or the reference point of the sixteen position vectors.

15. Input device according to claim 14, **characterised in that** the evaluation unit is adapted, in case of position vectors with the same direction, to assign the direction vector to that position vector, depending on whether the input gesture corresponds to the selection of the last character of the word, the lifting of the input medium off the input surface being detectable by the evaluation unit.

**Revendications**

1. Procédé destiné à la détection de la sélection d'un caractère d'une séquence de caractères à saisir à partir d'un ensemble de caractères (T1, T2, T3) sur une surface de saisie, où la sélection d'au moins un caractère de la séquence de caractères est déterminée en évaluant un vecteur de direction d'un geste (20), lequel est entré sur la surface de saisie, **caractérisé en ce que** le vecteur de direction est évalué selon un point de référence (10) sur la surface de saisie, en associant au vecteur de direction un vecteur de position avec le point de référence (10) comme origine ou comme point de référence.

2. Procédé selon la revendication 1, **caractérisé en ce que** la sélection d'au moins un caractère de la séquence de caractères de l'ensemble de caractères est déterminée en évaluant un changement de direction d'un geste (20), lequel est entré sur une zone associée au caractère de la surface de saisie.

3. Procédé selon la revendication 2, **caractérisé en ce que** l'ensemble des caractères comprend au moins deux sous-ensembles disjoints (T2, T3),
le changement de direction étant évalué pour des caractères du premier sous-ensemble (T2), et
le vecteur de direction étant évalué pour la sélection d'un caractère du deuxième sous-ensemble (T3).

13

4.  Procédé selon l'une des revendications précédentes, **caractérisé en ce que** l'ensemble de caractères comprend des caractères de l'alphabet d'une langue prédéterminée, et le deuxième sous-ensemble (T3) comprend des désinences des mots dans la langue prédéterminée.

5.  Procédé selon la revendication 4, **caractérisé en ce que** les désinences comprennent les huit caractères finaux les plus fréquents des mots et/ou les huit suffixes les plus fréquents des mots.

6.  Procédé selon l'une des revendications 3 à 5, **caractérisé en ce qu'**au vecteur de direction est associé un vecteur de position d'un ensemble de seize vecteurs de position, où la direction du vecteur de position correspond à la direction du vecteur de direction et où à l'origine ou au point de référence des seize vecteurs de position est associée une lettre du deuxième sous-ensemble.

7.  Procédé selon la revendication 6, **caractérisé en ce que** l'attribution d'un vecteur de direction à un vecteur de position dans le cas de vecteurs de position avec la même direction a lieu en fonction du fait que le geste entré corresponde à la sélection du dernier caractère du mot, en détectant l'enlèvement du support de saisie de la surface de saisie.

8.  Procédé selon l'une des revendications précédentes, **caractérisé en ce que** sur la surface de saisie un masque de saisie est affiché avec les caractères de l'ensemble de caractères.

9.  Procédé selon l'une des revendications précédentes, **caractérisé en ce que** les gestes saisis forment un idéogramme décrivant le mot, et l'idéogramme est évalué en évaluant les gestes formant l'idéogramme.

10. Procédé selon l'une des revendications précédentes, **caractérisé en ce que** la saisie d'un point sur la zone attribuée à un caractère de la surface de saisie et/ou la saisie d'une ligne verticale sur la zone attribuée à un caractère de la surface de saisie est évaluée comme geste, et à ce geste en fonction du caractère est attribuée une séquence de caractères prédéterminée.

11. Dispositif de saisie (100), en particulier un terminal mobile avec une surface de saisie tactile (101) pour la sélection de caractères d'une séquence de caractères à saisir, où sur la surface de saisie tactile un masque de saisie (200) avec un nombre de caractères d'un ensemble de caractères est représentable, où le dispositif de saisie présente une unité d'évaluation, laquelle étant adaptée pour déterminer la sélection d'au moins un caractère de la séquence de caractères en évaluant un vecteur de direction d'un geste (20), lequel est saisi avec un support de saisie (500) sur la surface de saisie (101), **caractérisé en ce que** l'unité d'évaluation est adoptée pour évaluer le vecteur de direction selon un point de référence (10), en associant au vecteur de direction un vecteur de position avec le point de référence (10) comme origine ou comme point de référence.

12. Dispositif de saisie selon la revendication 11, **caractérisé en ce que** la surface de saisie tactile comprend des secteurs associés aux caractères, où l'unité d'évaluation détermine la sélection d'au moins un caractère de la séquence de caractères en évaluant un changement de direction d'un geste, lequel est saisi avec le support de saisie sur une zone associée au caractère.

13. Dispositif de saisie selon la revendication 12, **caractérisé en ce que** l'ensemble de caractères comprend au moins deux sous-ensembles disjoints, où l'unité d'évaluation évalue le changement de direction d'un geste pour des caractères du premier sous-ensemble, et évalue le vecteur de direction pour la sélection d'un caractère du deuxième sous-ensemble.

14. Dispositif de saisie selon l'une des revendications 11 à 13, **caractérisé en ce que** sur le masque de saisie est représenté le point de référence, où le vecteur de direction est évaluable par rapport au point de référence, étant associable au vecteur de direction un vecteur de position d'un ensemble de seize vecteurs de position avec le point de référence comme origine ou comme point de référence, où la direction du vecteur de position correspond à la direction du vecteur de direction et où à l'origine ou au point de référence des seize vecteurs de position est associable une lettre du deuxième sous-ensemble.

15. Dispositif de saisie selon la revendication 14, **caractérisé en ce que** l'unité d'évaluation est adaptée pour attribuer, dans le cas de vecteurs de position avec la même direction, le vecteur de direction à ce vecteur de position, en fonction du fait que le geste entré corresponde à la sélection du dernier caractère du mot, l'enlèvement du support de saisie de la surface de saisie étant détectable par l'unité d'évaluation.

**Fig. 1a**

**Fig. 1b**

**Fig. 2a**

**Fig. 2b**

dogs

**Fig. 2c**

pony

**Fig. 2d**

bed

**Fig. 3a**

**Fig. 3b**

**Fig. 3c**

open

**Fig. 3d**

closed

17

Fig. 4

worry

Fig. 5

McGraw

B    L    P    X

K    C    R →e    S    F

20

W    e    H    T    A    U    E
              O    I

J    M    N    D    Y

Z    G    V    Q

**Fig. 6**

we're

20

B    L    R    X
y

K    C    R    s r    F
              a   e

W    H    T    A    U    E
              O    I

J    M    N    D    Y

Z    G    V    Q

**Fig. 7**

passer-by

B　　　L　　　P　　　X

20

K　　　C　　R　　　S　　　F
y

W　　　H　　T　　A ● U　　E
O　　I

J　　　M　　N　　　D　　　Y

Z　　　G　　V　　　Q

**Fig. 8**

Sincerely yours

EP 2 169 522 B1

100

101          300

200

500

B      L      P      X

K      C      R      S      F

W      H      T      *A* : *U*      E
                      *O* : *I*

J      M      N      D      Y

Z      G      V      Q

400

**Fig. 9**

21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1555601 A2
- US 20040120583 A
- US 20040140956 A1
- US 20040104896 A1
- WO 2004063833 A2